# EUROPÄISCHE PATENTSCHRIFT

(11) **EP 4 400 669 B1**
(45) Veröffentlichungstag und Bekanntmachung des Hinweises auf die Patenterteilung: **12.08.2026**
(21) Anmeldenummer: 23216238.8
(22) Anmeldetag: 13.12.2023
(51) Int. Cl.: E04D 1/12, E04D 1/36, F24S 20/69, H02S 20/25

(54) **DACHMODUL UND VERFAHREN ZUR HERSTELLUNG EINES DACHMODULS**
ROOF MODULE AND METHOD FOR PRODUCING A ROOF MODULE
MODULE DE TOIT ET PROCÉDÉ DE FABRICATION D'UN MODULE DE TOIT

(30) Priorität: 10.01.2023 DE 102023100432
(43) Veröffentlichungstag der Anmeldung: 17.07.2024
(73) Patentinhaber: Luckow, Hans-Jürgen, 24558 Henstedt-Rhen (DE)
(72) Erfinder: Luckow, Hans-Jürgen, 24558 Henstedt-Rhen (DE)
(74) Vertreter: Klickow & Wetzel PartGmbB

(56) Entgegenhaltungen:
- WO-A1-2019/205469
- CN-U- 208 650 408
- ES-A1- 2 371 428
- FR-A1- 3 105 278
- US-A- 5 058 333

## Beschreibung

Die Erfindung betrifft ein Dachmodul zur Eindeckung eines Daches, wobei das Dachmodul mindestens eine Vorrichtung zur Energiegewinnung aus Sonnenstrahlung und/oder der Umgebungstemperatur aufweist.

Darüber hinaus betrifft die Erfindung ein Verfahren zur Herstellung eines solchen Dachmoduls. Es sind bereits viele verschiedene Formen von Dachmodulen mit Vorrichtungen zur Gewinnung von Energie aus Sonnenstrahlung bekannt. Beispielsweise sind plattenartige Solarpaneele oder Solarthermieanlagen auf entsprechenden Halterungen auf Hausdächern montiert. Eine unter anderem aus ästhetischen Gesichtspunkten verbesserte Konstruktion ist beispielsweise durch die Integration von Photovoltaik-Elementen und/oder Solarthermie-Elementen in Dachmodule ermöglicht, die selbst zur Eindeckung des Daches, also ebenso als klassische Dachpfannen oder Dachziegel, dienen.

Derartige Dachmodule sind beispielsweise aus der DE 10 2017 001 948 A1 , WO 2019/205469 A1 und CN 208 650 408 U bekannt.

Die entsprechenden Dachmodule sind zumindest teilweise mit benachbarten Dachmodulen zur Leitung von elektrischem Strom und/oder eines Wärmemittels miteinander verbunden. Weiterhin ist zur Abdichtung des Daches gegen das Eindringen von Wasser eine gewisse Überlappung benachbarter Dachmodule erforderlich.

Daraus ergeben sich bei den bekannten Konstruktionen erhebliche Probleme, wenn ein Dachmodul in einer gedeckten Dachfläche beispielsweise zur Reparatur oder zum Austausch entnommen werden muss. Durch die zumeist in Reihen vom First in Richtung Traufe vorhandene Verbindung der einzelnen Dachmodule zur Leitung von elektrischem Strom und/oder eines Wärmemittels in Kombination mit einer sowohl in selbiger Richtung als auch in senkrechter Richtung dazu von Giebel zu Giebel verlaufenden Überlappungen der Dachmodule muss vom First aus ein großer Teil des Daches abgedeckt werden, um ein weiter unten liegendes Dachmodul zu entnehmen. Ein einfaches Hochschieben einzelner Dachmodule wie bei herkömmlichen Dachpfannen ist aufgrund der Verbindung zur Leitung von elektrischem Strom und/oder eines Wärmemittels nicht möglich.

Aus der ES 2 371 428 A1 ist bereits ein Dachmodul bekannt, das einen Grundkörper sowie Überlappungsbereiche aufweist. Die Überlappungsbereiche dienen zur Bildung eines Verbundes aus benachbarten Dachmodulen. Zur Realisierung der Überlappungsbereiche können Einschubleisten und Führungsschienen verwendet werden.

Aus den Dokumenten FR 3 105 278 A1 sowie US 5,058,333 sind jeweils Dachmodule mit Führungsschienen und Einschubleisten bekannt, wobei durch die Kombination der Führungsschienen und der Einschubleisten Überlappungsbereiche bereitgestellt werden.

Es ist daher eine Aufgabe der Erfindung ein Dachmodul zu schaffen, das die genannten Probleme zumindest teilweise behebt.

Diese Aufgabe wird erfindungsgemäß durch ein Dachmodul gemäß Patentanspruch 1 gelöst.

Darüber hinaus ist es eine Aufgabe der Erfindung, ein Verfahren zur Herstellung eines solchen Dachmoduls anzugeben.

Diese Aufgabe wird erfindungsgemäß durch ein Verfahren gemäß Patentanspruch 9 gelöst.

In den abhängigen Patentansprüchen werden vorteilhafte Ausführungsformen der Erfindung beansprucht.

Die nachfolgend offenbarten Merkmale eines Dachmoduls sowie eines Verfahrens zur Herstellung eines Dachmoduls sind sowohl einzeln als auch in allen ausführbaren Kombinationen Bestandteil der Erfindung.

In Bezug auf die Seiten des Dachmoduls gelten die folgenden Definitionen.

Die Vorderseite des Dachmoduls ist die Wetterseite, also die nach der Eindeckung des Daches obenliegende / außenliegende Seite des Dachmoduls. Die Rückseite des Dachmoduls liegt gegenüber der Vorderseite.

Das obere Ende des Dachmoduls ist nach der Eindeckung des Daches aufgrund der Dachneigung das höher liegende Ende des Dachmoduls, das in Richtung des Firsts ausgerichtet ist. Das untere Ende ist dem oberen Ende entsprechend gegenüberliegend angeordnet und Richtung Traufe ausgerichtet.

Ein erfindungsgemäßes Dachmodul ist zur Eindeckung eines Daches ausgebildet und weist einen Grundkörper und mindestens eine Einrichtung zur Energiegewinnung aus Sonnenstrahlung und/oder der Umgebungstemperatur in Form von elektrischer Energie und/oder Wärmeenergie auf.

In Ausführungsformen der Erfindung ist der Grundkörper im wesentlichen plattenartig ausgebildet. Ein im wesentlichen plattenartiger Grundkörper im Sinne dieser Schrift umfasst alle bekannten Formen von Dachmodulen, d.h. sowohl flache Platten als auch solche mit einem Profil wie beispielsweise Hohlpfannenziegel, Falzziegel, Flachdachziegel oder Ziegel in der Form der Frankfurter Pfanne.

In anderen Ausführungsformen der Erfindung sind auch gewölbte Grundkörper des Dachmoduls möglich, z.B. in der Bauweise Mönch und Nonne.

Weiterhin weist das Dachmodul Überlappungsbereiche zur Überlappung mit benachbarten Dachmodulen auf, wobei das Dachmodul auf einer ersten Seite einen ersten Überlappungsbereich aufweist, der zur Überlappung mit einem seitlich benachbarten Dachmodul ausgebildet ist. Dabei ist der erste Überlappungsbereich zur Anordnung unter dem korrespondierenden Überlappungsbereich des seitlich benachbarten Dachmodul ausgebildet. Auf der der ersten Seite gegenüberliegenden Seite weist das Dachmodul einen zweiten Überlappungsbereich auf, der der zur Überlappung mit einem auf der zweiten Seite seitlich benachbarten Dachmodul ausgebildet ist. Dabei ist der zweite Überlappungsbereich zur Anordnung über dem korrespondierenden Überlappungsbereich des seitlich benachbarten Dachmoduls ausgebildet.

Seitlich benachbarte Dachmodule sind dabei solche Dachmodule, die auf einem gedeckten Dach in einer horizontalen Reihe nebeneinander liegen.

Erfindungsgemäß ist der erste Überlappungsbereich als eine Einschubleiste ausgebildet, die in einem montierten Zustand des Dachmoduls in eine Führungsschiene des Dachmoduls eingeschoben ist und die zum oberen Ende des Dachmoduls hin aus diesem herausziehbar ist.

Die Einschubleiste weist einen länglichen Grundkörper auf.

In Ausführungsformen der Erfindung weist die Einschubleiste einen leistenartigen Grundkörper auf.

In verschiedenen Ausführungsformen der Erfindung kann die Einschubleiste kürzer, gleich lang oder auch länger als der übrige Grundkörper des Dachmoduls ausgebildet sein.

Die Führungsschiene erstreckt sich auf kürzerer oder auf gleicher Länge vom oberen Ende des Dachmoduls aus.

Im montierten Zustand der Einschubleiste am Dachmodul ist somit je nach Länge und Ausbildung der Einschubleiste und der Führungsschiene ein bündiger Abschluss der Einschubleiste am oberen und unteren Ende des Dachmoduls (gleiche Länge), ein bündiger Abschluss an einem der Enden des Dachmoduls und ein Überstand oder ein Freiraum am anderen Ende des Dachmoduls oder auch ein Überstand an beiden Enden, ein Freiraum an beiden Enden oder ein Überstand an einem Ende und ein Freiraum am anderen Ende gemäß verschiedener Ausführungsformen der Erfindung möglich.

Dadurch ist für verschiedene Konstellationen von Dachmodulen und Einschubleisten eine Überlappung der Dachmodule in Richtung von First zur Traufe möglich.

Die Einschubleiste und die Führungsschiene weisen im Verbindungsbereich korrespondierende Verbindungsprofile zur Realisierung eines Formschlusses auf. Dadurch ist ein Herausrutschen der Einschubleiste zur Seite oder nach unten hin ausgeschlossen.

In Ausführungsformen der Erfindung sind die Profile der Einschubleiste und der Führungsschiene im Querschnitt als ineinandergreifende Haken realisiert.

Die Führungsschiene weist in Ausführungsformen der Erfindung in Längsrichtung (vom oberen Ende zum unteren Ende des Dachmoduls) in Abständen angeordnete Profilelemente auf, die das Verbindungsprofil der Führungsschiene realisieren. Dies ermöglicht im Vergleich zu einem durchgehenden Profil Materialeinsparungen und erzeugt Vorteile bei der Entformung des Dachmoduls bei einem Herstellungsverfahren des Grundkörpers in einem Formgussverfahren, beispielsweise in einem Spritzgussverfahren.

In anderen Ausführungsformen der Erfindung ist das Verbindungsprofil der Führungsschiene als ein durchgehendes Profil ausgebildet.

An ihrem unteren Ende weist die Führungsschiene einen Anschlag auf, bis zu dem die Einschubleiste in die Führungsschiene einschiebbar ist.

Der Anschlag kann in Bezug auf den Grundkörper des Dachmoduls an dessen unteren Ende oder mit einem Abstand zum unteren Ende des Dachmoduls angeordnet sein.

In Ausführungsformen der Erfindung weist/weisen das Dachmodul und/oder die Einschubleiste eine Fixiereinrichtung zur lösbaren Fixierung der Einschubleiste im Dachmodul auf. Die Fixiereinrichtung ist derart ausgebildet, dass die Einschubleiste in fixiertem Zustand auch nach oben hin nicht aus der Führungsschiene herausrutschen kann. Die Fixiereinrichtung ist im Bereich des oberen Endes des Dachmoduls derart angeordnet, dass diese bei einem verlegten Dachmodul vom oberen Ende aus zugänglich ist.

In Ausführungsformen der Erfindung ist die Fixeireinrichtung als ein Rastelement oder als korrespondierende Rastelemente an der Führungsschiene und/oder der Einschubleiste realisiert.

Im Überlappungsbereich weist die Einschubleiste vorzugsweise eine Dichtstruktur zur Abdichtung des Überlappungsbereichs gegen den Eintritt von Wasser auf.

Die Dichtstruktur ist durch mindestens eine auf der Vorderseite der Einschubleiste herausragende Rippe realisiert, die vom oberen Ende zum unteren Ende verläuft.

Vorzugsweise ist die Dichtstruktur mithilfe von mindestens zwei parallel vom oberen Ende zum unteren Ende verlaufenden Rippen realisiert.

Besonders bevorzugt ist die Dichtstruktur mithilfe von drei parallel vom oberen Ende zum unteren Ende verlaufenden Rippen realisiert.

Bei mehr als einer Rippe ist die außenliegende Rippe in Ausführungsformen der Erfindung höher realisiert als die mindestens eine weitere innenliegende Rippe. Dadurch wird durch den mindestens einen zwischen den Rippen realisierten Kanal ein Überlaufschutz realisiert, über den eindringendes Wasser nach unten hin ableitbar ist.

In Ausführungsformen der Erfindung weist das Dachmodul mindestens einen Haken auf, mit dem das Dachmodul an einer Haltestruktur am Dach einhängbar ist.

Der mindestens eine Haken ist in Ausführungsformen der Erfindung am oberen Ende des Dachmoduls und/oder an der Rückseite des Dachmoduls angeordnet. Es ist auch möglich, dass der mindestens eine Haken an einer beliebigen Position an der Rückseite des Dachmoduls und/oder am unteren Ende des Dachmoduls angeordnet ist.

Dadurch ist eine besonders robuste Verbindung der Dachmodule mit dem Dachstuhl möglich, um ein Verrutschen oder Wegfliegen von Dachmodulen auch bei starken Winden und Stürmen zu verhindern.

Die Realisierung von mindestens einem Haken am Dachmodul ist unabhängig von den übrigen in dieser Schrift genannten Merkmalen bezüglich der Einschubleiste und der korrespondierenden Führungsschiene möglich.

Die Einrichtung zur Energiegewinnung aus Sonnenstrahlung in Form von elektrischer Energie und/oder Wärmeenergie ist mithilfe von mindestens einem Photovoltaikmodul und/oder mindestens einem Solarthermiemodul realisiert.

Das Solarthermiemodul ist in Ausführungsformen der Erfindung als eine Vorrichtung zur Energiegewinnung aus Sonnenstrahlung und/oder der Umgebungstemperatur ausgebildet. D.h. das Modul ist zur Energiegewinnung nicht unbedingt auf Sonnenstrahlung als Energiequelle angewiesen, sondern ist in entsprechenden Ausführungsformen der Erfindung beispielsweise zur Gewinnung von Energie aus der Umgebungstemperatur einsetzbar.

Das erfindungsgemäße Dachmodul weist vorzugsweise Verbindungsmittel zur Verbindung mit seitlich und/oder darüber- oder darunterliegend benachbarten Dachmodulen zur Leitung von elektrischem Strom und/oder eines Wärme- oder Kältemittels auf.

Die zur Leitung eines Wärme- oder Kältemittels miteinander verbundenen Dachmodule eines Daches sind zur Realisierung eines Wärmetauschers für eine Energiegewinnungsvorrichtung, beispielsweise eine Wärmepumpe, verwendbar, sodass die aus der Umgebung des Wärmetauschers mithilfe des Wärme- oder Kältemittels aufgenommene Energie nutzbar ist.

In besonders vorteilhaften Ausführungsformen des Dachmoduls weist dieses mindestens ein Photovoltaikmodul und mindestens ein Solarthermiemodul auf.

Vorzugsweise weist das Dachmodul mindestens ein Photovoltaikmodul auf, das auf dem mindestens einen Solarthermiemodul angeordnet ist, wobei die von der mindestens einen Solarzelle des Photovoltaikmoduls erzeugte Wärme an das Solarthermiemodul übertragbar ist. Dadurch wird die in Wärme realisierte Verlustenergie und die ohnehin vorhandene Umgebungswärme zur Energiegewinnung nutzbar gemacht und gleichzeitig eine Kühlung der Solarzellen realisiert. Durch die Kühlung der Solarzellen sind diese mit einem höheren Wirkungsgrad betreibbar.

Die Verbindung von Photovoltaikmodul und Solarthermiemodul kann beispielsweise durch Ultraschallschweißen erfolgen.

In Ausführungsformen der Erfindung ist zwischen dem Photovoltaikmodul und dem Solarthermiemodul eine Kunststofffolie oder -platte angeordnet.

In vorteilhaften Ausführungsformen der Erfindung ist zwischen dem Photovoltaikmodul und dem Solarthermiemodul eine Metallfolie oder ein Metallblech, beispielsweise eine Kupferfolie oder ein Kupferblech, zur effizienten Wärmeleitung angeordnet.

In vorteilhaften Ausführungsformen der Erfindung weist das Solarthermiemodul eine mäanderförmige Leitungsstruktur für das Wärmemittel auf, sodass die für den Wärmeaustausch nutzbare Fläche maximiert wird.

Das Solarthermiemodul ist in Ausführungsformen der Erfindung aus Metall oder Kunststoff gefertigt.

In Ausführungsformen der Erfindung ist durch die Leitungen des mindestens einen Solarthermiemoduls ein Wärme- oder Kältemittel leitbar, mit dem Wärmeenergie in den Bereich der Photovoltaikmodule zuführbar ist. Dadurch können die Photovoltaikmodule beispielsweise bei einer Verdeckung mit Eis oder Schnee im Winter freigeschmolzen werden, sodass die Gewinnung elektrischer Energie auch unter den entsprechenden Bedingungen möglich ist.

In Ausführungsformen der Erfindung ist das Wärmemittel zu diesem Zweck beheizbar.

Die zur kombinierten Anordnung von Photovoltaikmodul und Solarthermiemodul offenbarten Merkmale sind auch unabhängig von den Merkmalen zur Einschubleiste und der korrespondierenden Führungsschiene sowie den Haken realisierbar.

Ein erfindungsgemäßes Verfahren zur Herstellung eines Dachmoduls umfasst zumindest die folgenden Schritte:
- Bereitstellen eines Dachmoduls mit einer Führungsschiene und Bereitstellen einer Einschubleiste,
- Einschieben der Einschubleiste in die Führungsschiene des Dachmoduls zur Realisierung eines Überlappungsbereichs des Dachmoduls mithilfe der Einschubleiste.

In Ausführungsformen der Erfindung wird die Einschubleiste in der Führungsschiene fixiert.

In vorteilhaften Ausführungsformen des erfindungsgemäßen Verfahrens wird ein erfindungsgemäßes Dachmodul verwendet.

In den nachfolgend erläuterten Figuren sind beispielhafte Ausführungsformen der Erfindung dargestellt. Es zeigen:
- Figur 1:: Eine Draufsicht auf die Vorderseite eines erfindungsgemäßen Dachmoduls,
- Figur 2:: Eine Ansicht der Rückseite und eine Seitenansicht eines erfindungsgemäßen Dachmoduls,
- Figur 3:: Einen Querschnitt durch eine Einschubleiste gemäß der Erfindung,
- Figur 4:: Eine Draufsicht auf eine Einschubleiste gemäß der Erfindung,
- Figur 5:: Eine perspektivische Ansicht von neun fachgerecht montierten Dachmodulen,
- Figur 6:: Eine Seitenansicht eines Dachmoduls mit Haken und
- Figur 7:: Eine Draufsicht auf ein Dachmodul mit zwei Solarthermiemodulen.

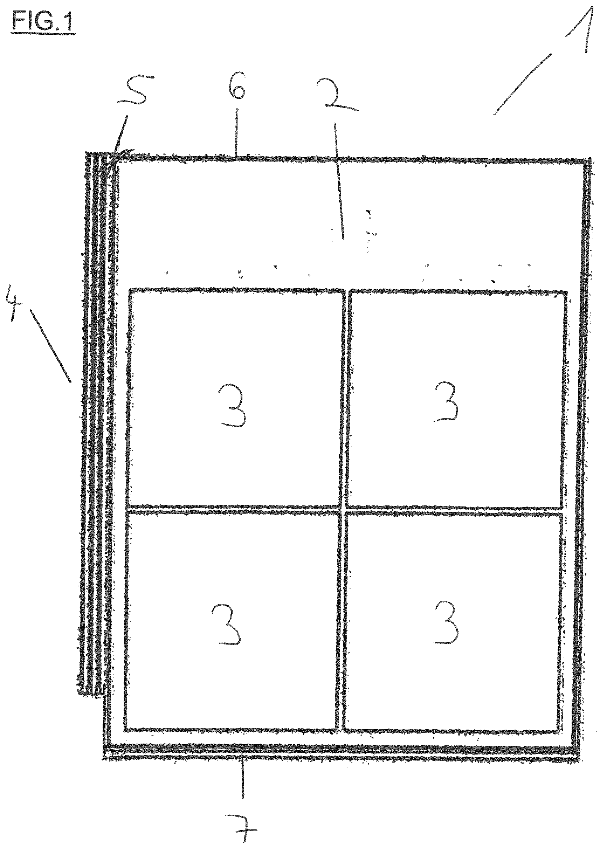

In Figur 1 ist die Vorderseite (2) einer erfindungsgemäßen Ausführungsform eines Dachmoduls (1) dargestellt. Das Dachmodul (1) weist vier Einrichtungen zur Energiegewinnung aus Sonnenstrahlung (3) auf, die in einer Matrix nebeneinander auf der Vorderseite (2) des Dachmoduls (1) angeordnet sind. Im Bereich des oberen Endes (6) des Dachmoduls (1) ist auf der Vorderseite (2) ein Freiraum belassen, der zumindest teilweise der Überlappung mit einem darüberliegenden benachbarten Dachmodul (1) dient.

Auf der linken Seite weist das Dachmodul (1) einen ersten Überlappungsbereich (4) auf, der zur Überlappung mit einem auf der linken Seite benachbarten Dachmodul (1) ausgebildet ist und der als eine Einschubleiste (5) ausgebildet ist.

Die Einschubleiste (5) erstreckt sich vom oberen Ende (6) in Richtung des unteren Endes (7), endet jedoch bereits mit einem Abstand zum unteren Ende (7).

Es sind jedoch in anderen Ausführungsformen auch andere Längenkonfigurationen und Anordnungen der Einschubleiste (5) zum Dachmodul (1) möglich.

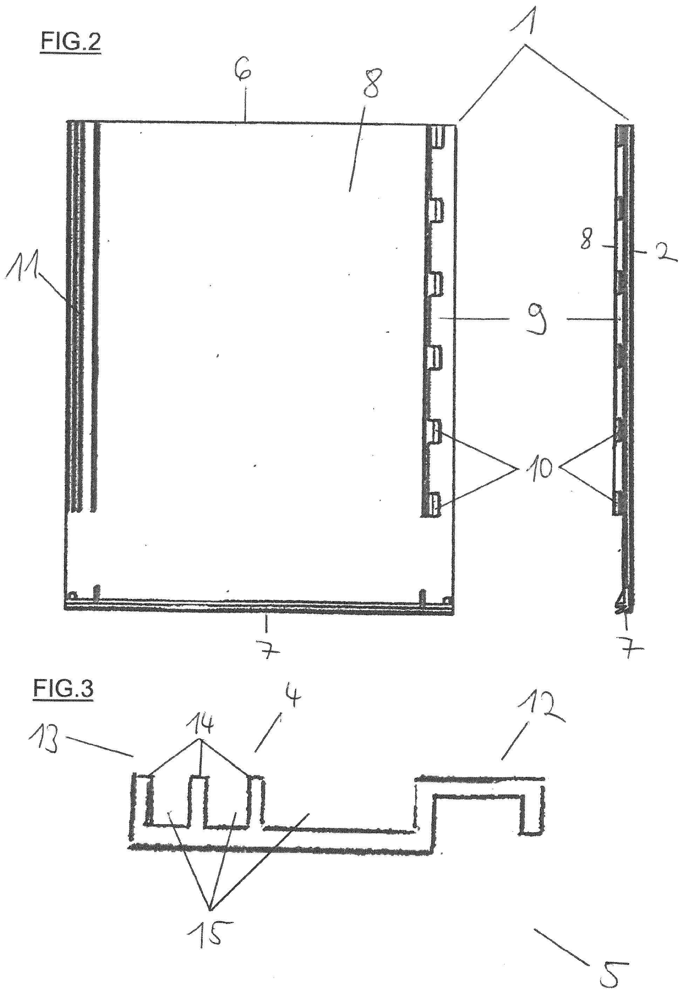

Figur 2 zeigt eine erfindungsgemäße Ausführungsform eines Dachmoduls (1) von der Rückseite (8) und rechts daneben in einer Seitenansicht. Auf der rechten Seite weist das Dachmodul (1) eine Führungsschiene (9) auf, in die die Einschubleiste (5) einschiebbar ist.

Die Führungsschiene (9) ist in der gezeigten Ausführungsform durch regelmäßig beabstandete Profilelemente (10) realisiert und erstreckt sich nicht über die gesamte Länge des Dachmoduls (1), sodass am unteren Ende (7) ein Freiraum verbleibt.

In anderen Ausführungsformen der Erfindung ist ein durchgehendes Verbindungsprofil der Führungsschiene (9) realisiert und/oder die Führungsschiene (9) erstreckt sich über die gesamte Länge des Dachmoduls (1).

Auf der linken Seite der Rückseite des Dachmoduls (1) ist der zweite Überlappungsbereich (11) ausgebildet, der in einem verlegten Zustand der Dachmodule (1) in den korrespondierenden ersten Überlappungsbereich (4) des benachbarten Dachmoduls (1) eingreift.

In Figur 3 ist ein Querschnitt durch eine Einschubleiste (5) eines erfindungsgemäßen Dachmoduls (1) dargestellt. Die Einschubleiste (5) weist auf der rechten Seite ein hakenförmig ausgebildetes Verbindungsprofil (12) auf, das korrespondierend zum Profil der Führungsschiene (9) ausgebildet ist.

In anderen Ausführungsformen der Erfindung sind korrespondierende Verbindungsprofile (12) von Einschubleiste (5) und Führungsschiene (9) möglich, die nicht hakenförmig ausgebildet sind.

Auf der linken Seite weist die Einschubleiste (5) ein Dichtprofil (13) auf, das vorliegend durch drei Rippen (14) realisiert ist, die sich parallel in Längsrichtung der Einschubleiste (5) erstrecken. Zwischen den Rippen (14) sowie zwischen der innenliegenden Rippe (14) und dem Verbindungsprofil (12) sind Ablaufkanäle (15) ausgebildet.

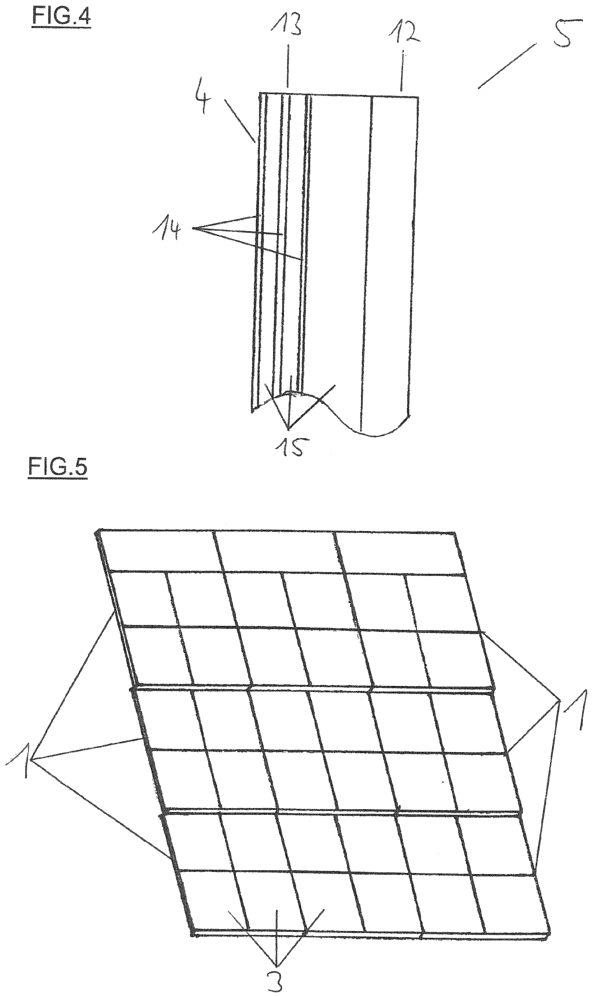

Figur 4 zeigt eine Draufsicht auf einen Teil einer Einschubleiste (5) gemäß Figur 3.

In Figur 5 sind neun verlegte Dachmodule (1) dargestellt. Die Dachmodule (1) überlappen reihenweise auf der linken und rechten Seite sowie oben und unten.

Die Dachmodule (1) sind in Richtung von oben nach unten zudem reihenweise mithilfe der jeweiligen Verbindungsmittel zur Verbindung mit benachbarten Dachmodulen zur Leitung von elektrischem Strom und/oder eines Wärmemittels miteinander verbunden.

In anderen Ausführungsformen der Erfindung sind die Dachmodule (1) seitlich reihenweise mithilfe der jeweiligen Verbindungsmittel zur Verbindung mit benachbarten Dachmodulen zur Leitung von elektrischem Strom und/oder eines Wärmemittels miteinander verbunden.

Soll nun ein Dachmodul (1) ausgetauscht werden, ist es mithilfe der erfindungsgemäßen Konstruktion möglich, lediglich die jeweilige vom First zur Traufe verlaufende Reihe bis zum zu entnehmenden Dachmodul (1) hin zu demontieren. Die untenliegende Überlappung mit dem seitlich benachbarten Dachmodul (1) kann durch ein Herausziehen der Einschubleiste (5) des jeweiligen Dachmoduls (1) entfernt werden, sodass das jeweilige Dachmodul (1) einfach aus der Dachfläche herausgenommen werden kann. So kann sich ein Monteur entsprechend vom First aus zum zu tauschenden Dachmodul (1) hin vorarbeiten. Anschließend lässt sich das Dach auf umgekehrtem Wege wieder schließen.

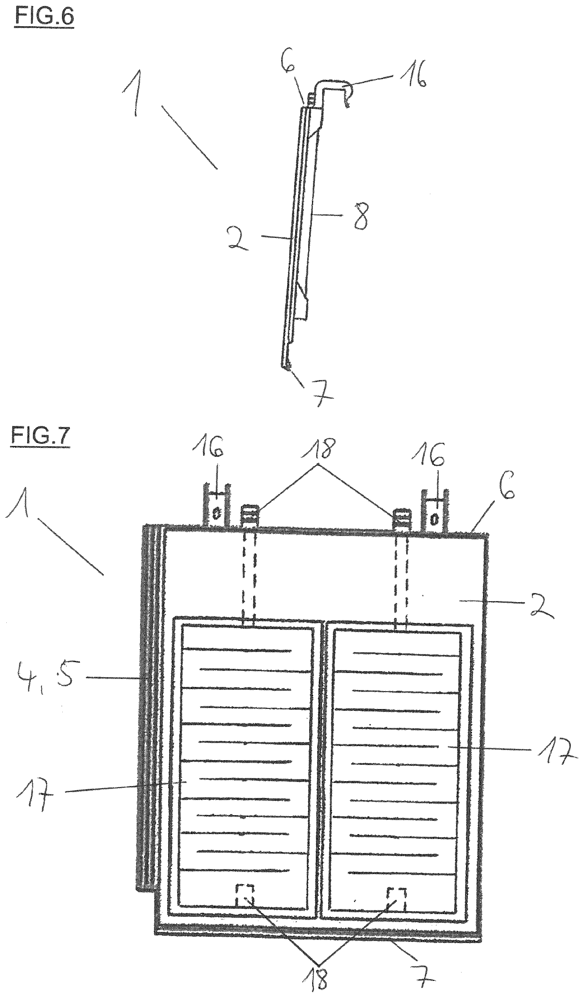

Figur 6 zeigt ein Dachmodul (1) mit mindestens einem im Bereich des oberen Endes (6) angeordneten Haken (16). Dieser ist in eine entsprechende Unterkonstruktion einhängbar und damit besser gesichert.

In Figur 7 ist eine Ausführungsform eines erfindungsgemäßen Dachmoduls (1) mit zwei Solarthermiemodulen (17) dargestellt. Die Solarthermiemodule (17) sind auf der Vorderseite (2) des Dachmoduls (1) angeordnet. Das Dachmodul (1) weist Verbindungsmittel (18) zur Verbindung mit benachbarten Dachmodulen und/oder einer zentralen Anlage zur Wärmegewinnung und zur Leitung eines Wärmemittels auf.

Im Solarthermiemodul (17) ist die Wärmemittelleitung mäanderförmig ausgebildet und realisiert einen Wärmetauscher.

Die Wärmemittelleitungen der Solarthermiemodule (17) sind derart ausgebildet, dass die Leitungslänge im Bereich der Mitte des Dachmoduls (1) maximiert wird. Unter der Annahme, dass mittig auf dem Dachmodul (1) die meiste Wärmeenergie verfügbar ist, ist so eine effektive Übertragung der Energie auf das Wärmemittel ermöglicht.

In der gezeigten vorteilhaften Ausführungsform der Erfindung verlaufen die mäanderförmigen Wärmemittelleitungen der nebeneinanderliegenden Solarthermiemodule (17) zu einer vom oberen Ende (6) zum unteren Ende (7) des Dachmoduls (1) mittig zwischen den Solarthermiemodulen (17) verlaufenden Achse spiegelverkehrt.

Auf die Solarthermiemodule (17) ist in Ausführungsformen der Erfindung mindestens ein Photovoltaikmodul montiert.

In der gezeigten Ausführungsform der Erfindung weist das Dachmodul (1) im Bereich des oberen Endes (6) zwei Haken (16) auf.

## Patentansprüche

1. Dachmodul (1) zur Eindeckung eines Daches, das Dachmodul (1) aufweisend einen Grundkörper und mindestens eine Einrichtung zur Energiegewinnung aus Sonnenstrahlung und/oder der Umgebungstemperatur (3) in Form von elektrischer Energie und/oder Wärmeenergie, wobei das Dachmodul (1) Überlappungsbereiche (4, 11) zur Überlappung mit benachbarten Dachmodulen aufweist, und wobei das Dachmodul (1) auf einer ersten Seite einen ersten Überlappungsbereich (4) aufweist, der zur Überlappung mit einem seitlich benachbarten Dachmodul ausgebildet ist, wobei der erste Überlappungsbereich (4) zur Anordnung unter dem korrespondierenden Überlappungsbereich des seitlich benachbarten Dachmoduls ausgebildet ist, und wobei das Dachmodul (1) auf der der ersten Seite gegenüberliegenden Seite einen zweiten Überlappungsbereich (11) aufweist, der der zur Überlappung mit einem auf der zweiten Seite seitlich benachbarten Dachmodul ausgebildet ist, wobei der zweite Überlappungsbereich (11) zur Anordnung über dem korrespondierenden Überlappungsbereich des seitlich benachbarten Dachmoduls ausgebildet ist, **dadurch gekennzeichnet, dass** der erste Überlappungsbereich (4) als eine Einschubleiste (5) ausgebildet ist, die in einem montierten Zustand des Dachmoduls (1) in eine Führungsschiene (9) des Dachmoduls (1) eingeschoben ist und die zum oberen Ende (6) des Dachmoduls (1) hin aus diesem herausziehbar ist, und dass die Einschubleiste (5) und die Führungsschiene (9) im Verbindungsbereich korrespondierende Verbindungsprofile (10, 12) zur Realisierung eines Formschlusses aufweisen.

2. Dachmodul (1) nach Anspruch 1, **dadurch gekennzeichnet, dass** sich die Führungsschiene (9) vom oberen Ende (6) des Dachmoduls (1) aus erstreckt.

3. Dachmodul (1) nach einem der Ansprüche 1 bis 2, **dadurch gekennzeichnet, dass** die Führungsschiene (9) in Längsrichtung in Abständen angeordnete Profilelemente (10) aufweist, die das Verbindungsprofil der Führungsschiene (9) realisieren.

4. Dachmodul (1) nach einem der Ansprüche 1 bis 3, **dadurch gekennzeichnet, dass** das Dachmodul (1) eine Fixiereinrichtung zur lösbaren Fixierung der Einschubleiste (5) im Dachmodul (1) aufweist, wobei die Fixiereinrichtung derart ausgebildet ist, dass die Einschubleiste (5) in fixiertem Zustand auch nach oben hin nicht aus der Führungsschiene (9) herausrutschen kann.

5. Dachmodul (1) nach einem der vorstehenden Ansprüche, **dadurch gekennzeichnet, dass** die Einschubleiste (5) im ersten Überlappungsbereich (4) eine Dichtstruktur (13) zur Abdichtung des ersten Überlappungsbereichs (4) gegen den Eintritt von Wasser aufweist.

6. Dachmodul (1) nach einem der vorstehenden Ansprüche, **dadurch gekennzeichnet, dass** das Dachmodul (1) mindestens einen Haken aufweist, mit dem das Dachmodul (1) an einer Haltestruktur an einem Dach einhängbar ist.

7. Dachmodul (1) nach einem der vorstehenden Ansprüche, **dadurch gekennzeichnet, dass** mindestens ein Photovoltaikmodul oben auf mindestens einem Solarthermiemodul (17) angeordnet ist, wobei die von der mindestens einen Solarzelle des Photovoltaikmoduls erzeugte Wärme an das Solarthermiemodul (17) übertragbar ist.

8. Dachmodul (1) nach einem der vorstehenden Ansprüche, **dadurch gekennzeichnet, dass** das Solarthermiemodul (17) eine mäanderförmige Leitungsstruktur für ein Wärme- oder Kältemittel aufweist.

9. Verfahren zur Herstellung eines Dachmoduls (1) umfassend die folgenden Schritte:
a.) Bereitstellen eines Dachmoduls (1) mit einer Führungsschiene (9) und Bereitstellen einer Einschubleiste (5),
b.) Einschieben der Einschubleiste (5) in die Führungsschiene (9) des Dachmoduls (1) zur Realisierung eines Überlappungsbereichs (4) des Dachmoduls (1) mithilfe der Einschubleiste (5),
c.) wobei ein Dachmodul (1) gemäß einem der Ansprüche 1 bis 8 gefertigt wird.

## Claims

1. A roof module (1) for covering a roof, the roof module (1) comprising a base body and at least one device for generating energy from solar radiation and/or the ambient temperature (3) in the form of electrical energy and/or thermal energy, wherein the roof module (1) comprises overlap regions (4, 11) for overlapping with adjacent roof modules, and wherein the roof module (1) comprises, on a first side, a first overlap region (4) designed to overlap with a laterally adjacent roof module, wherein the first overlap region (4) is configured to be positioned beneath the corresponding overlap area of the laterally adjacent roof module, and wherein the roof module (1) comprises, on the side opposite the first side, a second overlap area (11) configured to overlap with a laterally adjacent roof module on the second side, wherein the second overlap area (11) is designed to be positioned above the corresponding overlap area of the laterally adjacent roof module, **characterized in that** the first overlap area (4) is designed as a slide-in bar (5) which, when the roof module (1) is assembled, is inserted into a guide rail (9) of the roof module (1) and can be pulled out towards the upper end (6) of the roof module (1), and **in that** the slide-in bar (5) and the guide rail (9) have corresponding connecting profiles (10, 12) in the connection area to achieve a form lock.

2. Roof module (1) according to claim 1, **characterized in that** the guide rail (9) extends from the upper end (6) of the roof module (1).

3. Roof module (1) according to any one of claims 1 to 2, **characterized in that** the guide rail (9) comprises profile elements (10) arranged at intervals in the longitudinal direction, which form the connecting profile of the guide rail (9).

4. Roof module (1) according to any one of claims 1 to 3, **characterized in that** the roof module (1) comprises a fastening device for releasably securing the slide-in bar (5) within the roof module (1), wherein the fastening device is designed such that, when secured, the slide-in bar (5) cannot slip out of the guide rail (9), even upward.

5. Roof module (1) according to one of the preceding claims, **characterized in that** the slide-in bar (5) comprises, in the first overlap region (4), a sealing structure (13) for sealing the first overlap region (4) against the ingress of water.

6. Roof module (1) according to any one of the preceding claims, **characterized in that** the roof module (1) comprises at least one hook with which the roof module (1) can be hooked onto a support structure on a roof.

7. Roof module (1) according to any one of the preceding claims, **characterized in that** at least one photovoltaic module is arranged on top of at least one solar thermal module (17), wherein the heat generated by the at least one solar cell of the photovoltaic module can be transferred to the solar thermal module (17).

8. Roof module (1) according to one of the preceding claims, **characterized in that** the solar thermal module (17) comprises a meandering conduit structure for a heat transfer medium or cooling medium.

9. Method for producing a roof module (1) comprising the following steps:
a.) providing a roof module (1) with a guide rail (9) and providing a slide-in bar (5),
b.) inserting the slide-in bar (5) into the guide rail (9) of the roof module (1) to create an overlap region (4) of the roof module (1) using the slide-in bar (5),
c.) wherein a roof module (1) according to one of claims 1 to 8 is manufactured.

## Revendications

1. Module de toit (1) pour couvrir un toit, le module de toit (1) comportant un corps principal et au moins un dispositif pour produire de l'énergie à partir du rayonnement solaire et/ou de la température ambiante (3) sous forme d'énergie électrique et/ou d'énergie thermique, le module de toit (1) comportant des zones de chevauchement (4, 11) pour chevaucher des modules de toit adjacents, et le module de toit (1) comportant, sur un premier côté, une première zone de chevauchement (4) qui est formée pour chevaucher un module de toit adjacent latéralement, la première zone de chevauchement (4) étant formée pour être disposée sous la zone de chevauchement correspondante du module de toit adjacent latéralement, et le module de toit (1) comportant, sur le côté opposé au premier côté, une deuxième zone de chevauchement (11) qui est formée pour chevaucher un module de toit adjacent latéralement sur le deuxième côté, la deuxième zone de chevauchement (11) étant formée pour être disposée sur la zone de chevauchement correspondante du module de toit adjacent latéralement, **caractérisé en ce que** la première zone de chevauchement (4) est formée sous la forme d'une baguette d'insertion (5) qui, dans un état monté du module de toit (1), est insérée dans un rail de guidage (9) du module de toit (1) et qui peut être retirée du module de toit (1) vers l'extrémité supérieure (6) de celui-ci, et que la baguette d'insertion (5) et le rail de guidage (9) comportent dans la zone de liaison des profilés de liaison (10, 12) correspondants pour réaliser une complémentarité de forme.

2. Module de toit (1) selon la revendication 1, **caractérisé en ce que** le rail de guidage (9) s'étend à partir de l'extrémité supérieure (6) du module de toit (1).

3. Module de toit (1) selon l'une des revendications 1 à 2, **caractérisé en ce que** le rail de guidage (9) comporte des éléments profilés (10) disposés à des distances dans la direction longitudinale, qui forment le profil de liaison du rail de guidage (9).

4. Module de toit (1) selon l'une des revendications 1 à 3, **caractérisé en ce que** le module de toit (1) comporte un dispositif de fixation pour fixer de manière amovible la baguette d'insertion (5) dans le module de toit (1), le dispositif de fixation étant formé de telle manière que la baguette d'insertion (5) ne peut pas glisser hors du rail de guidage (9) même vers le haut dans l'état fixé.

5. Module de toit (1) selon l'une des revendications précédentes, **caractérisé en ce que** la baguette d'insertion (5) comporte dans la première zone de chevauchement (4) une structure d'étanchéité (13) pour rendre étanche la première zone de chevauchement (4) contre la pénétration d'eau.

6. Module de toit (1) selon l'une des revendications précédentes, **caractérisé en ce que** le module de toit (1) comporte au moins un crochet avec lequel le module de toit (1) peut être suspendu sur une structure de maintien sur un toit.

7. Module de toit (1) selon l'une des revendications précédentes, **caractérisé en ce qu'**au moins un module photovoltaïque est disposé en haut sur au moins un module solaire thermique (17), la chaleur générée par l'au moins une cellule solaire du module photovoltaïque pouvant être transmise au module solaire thermique (17).

8. Module de toit (1) selon l'une des revendications précédentes, **caractérisé en ce que** le module solaire thermique (17) comporte une structure de conduit en méandres pour un fluide caloporteur ou un réfrigérant.

9. Procédé de fabrication d'un module de toit (1), comprenant les étapes suivantes :
a.) fourniture d'un module de toit (1) avec un rail de guidage (9) et fourniture d'une baguette d'insertion (5),
b.) insertion de la baguette d'insertion (5) dans le rail de guidage (9) du module de toit (1) pour réaliser une zone de chevauchement (4) du module de toit (1) à l'aide de la baguette d'insertion (5),
c.) un module de toit (1) selon l'une des revendications 1 à 8 étant produit.
